# EUROPEAN PATENT APPLICATION

(11) **EP 2 073 414 A1**
(43) Date of publication of application: **24.06.2009**
(21) Application number: 06767525.6
(22) Date of filing: 28.06.2006
(51) Int. Cl.: H04J 3/16, H04J 3/00, H04L 12/28

(54) **MEDIA ACCESS CONTROL METHOD**

(71) Applicant: MITSUBISHI ELECTRIC CORPORATION, Chiyoda-ku Tokyo 100-8310 (JP)
(72) Inventor: KOGUCHI, Kazuumi, Tokyo 100-8310 (JP); MISHUKU, Tetsuya, Tokyo 100-8310 (JP)
(74) Representative: Zech, Stefan Markus
(86) International application number: PCT/JP2006/312908
(87) International publication number: WO 2008/001437

(57) **Abstract**

A media access control method, with a time division multiple access in a communication system that includes a master station (11) and a plurality of slave stations (1, 2, 3, ...) has been proposed. The master station (11) transmits a maximum requestable frequency band, and each of the slave stations requests a desired frequency band that does not exceed the maximum requestable frequency band and also starts creating transmission data corresponding to the desired frequency band. The master station (11) assigns the desired frequency band to each of the slave stations without reducing the desired frequency band. Finally, each of the slave stations transmits the created transmission data using the desired frequency band to the master station (11).

## Description

### TECHNICAL FIELD

The present invention relates to a media access control method by means of TDMA, more particularly, to a media access control method when communications between a master station and a plurality of slave stations is to be performed.

### BACKGROUND ART

TDMA (Time Division Multiple Access), for example, is known as a method for performing a conventional Media Access Control (MAC). Specifically, an access control when performing communications between a master station and a plurality of slave stations is realized using the TDMA, that is, media are accessed by time division. The master station determines an access timing of each of the plurality of slave stations during a certain period of time (frame time) and informs the determined access timing to each of the slave stations. On this occasion, if a frequency band assigned to the slave stations is fixed, it is advantageous to keep the access timing fixed. On the other hand, if the number of slave stations varies, or if the assigned frequency band is desired to be changed flexibly, the master station performs a scheduling for the slave stations at every frame time and informs the result to the slave stations.

In order to use the frequency band efficiently, it is preferable not to assign the frequency band fixed as explained in the former case but to perform the scheduling every time as explained in the later case. In the conventional scheduling by means of the TDMA, first, a slave station sends an assignment request (by means of number of slots, number of bytes, time, and the like) to the master station, and then the master station performs a scheduling by taking all the assignment requests that the master station has received into consideration and informs the result to the slave stations. With such a processing, an efficient scheduling is realized (refer to Patent Document 1).

In addition, Non-Patent Document 1 described below proposes a technique that if a fixed frequency band is required, as in a voice communication, the fixed frequency band is assigned from a time point when the fixed frequency band becomes necessary (such as when starting the voice communication) and the fixed frequency band is released at a time point when the fixed frequency band becomes unnecessary (such as after finishing the voice communication).

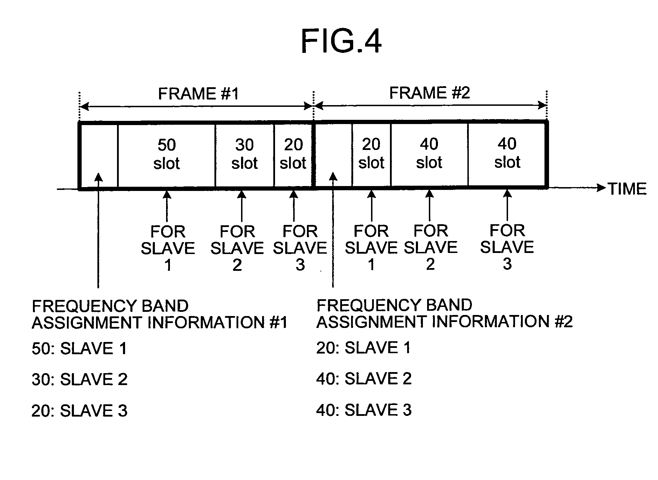

The conventional media access control described above is specifically explained here. Fig. 4 is a diagram illustrating a situation where the slave stations send frequency band requests to the master station and the master station performs a frequency band assignment for each slave station. Fig. 4 assumes that there are 100 slots for the time assignable to the slave stations during one frame time and the master station performs the frequency band assignment based on the requests from the three slave stations. In the first frame time #1, the master station assigns 50 slots to a slave station 1, 30 slots to a slave station 2, and 20 slots to a slave station 3. Moreover, in the next frame time #2, the master station assigns 20 slots to the slave station 1, 40 slots to the slave station 2, and 40 slots to the slave station 3. As described above, when the master station dynamically changes the frequency band to be assigned to the slave stations in every frame time, each slave station receives the frequency band information in the header of each frame to know the frequency band assignment to itself.

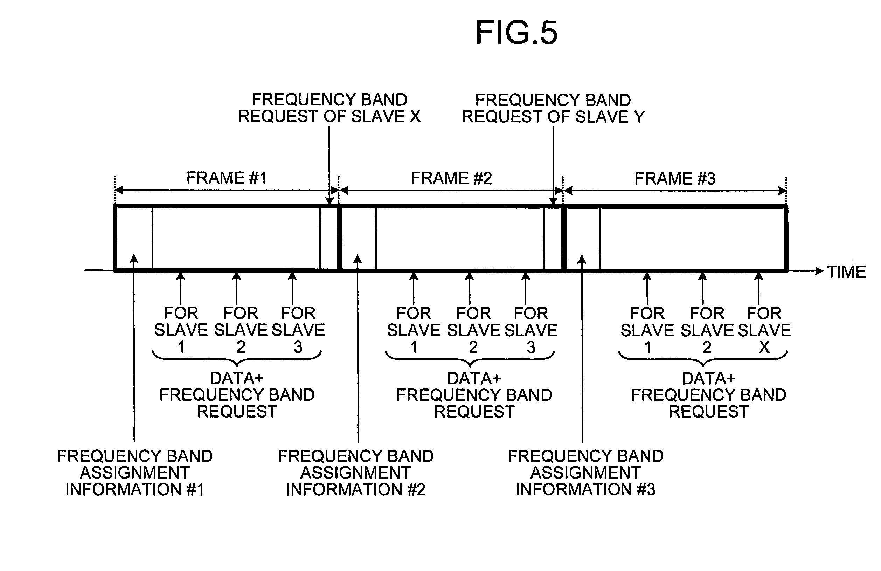

In addition, Fig. 5 is a diagram illustrating frequency band requests and a technique for assigning frequency bands when the number of slave stations is large, and this technique is realized in HiSWANa (High Speed Wireless Access Network type a). For example, when the number of slave stations is large, there is a possibility that the frequency band requests from all the slave stations cannot be received within one frame time. Therefore, as shown in the frame time of Fig. 5, a time (RCH: random access channel) during which an arbitrary slave station (slave station X or Y shown in the figure) can send signals is prepared. However, in the random access channel, if two or more slave stations send signals at the same time, because the signals collide with each other, the master station cannot receive these signals. For this reason, the master station informs all the slave stations of the result that indicates whether or not the master station has been able to receive the signals in the random access channel in the header of the next frame.

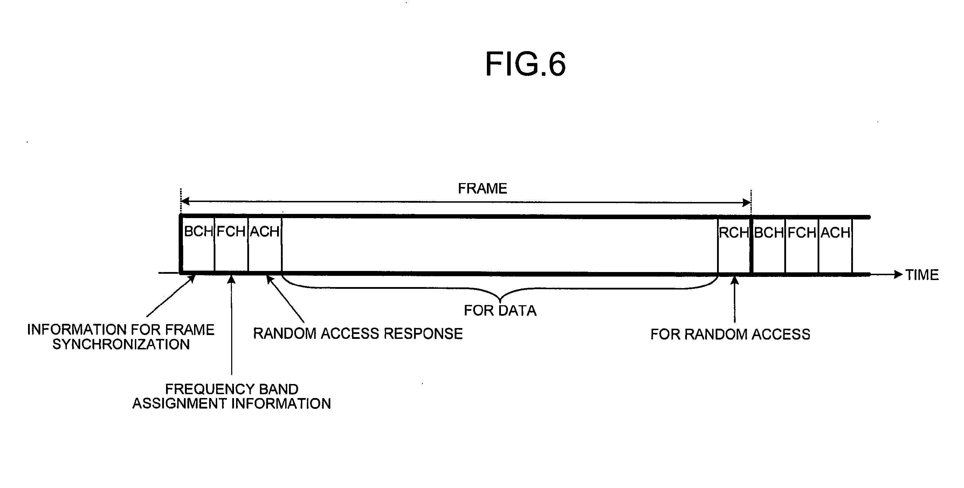

Fig. 6 is a diagram illustrating an example of a frame structure in the HiSWANa described above; RCH represents a random access channel, and ACH represents a random access response channel. In addition, FCH represents a channel for sending the information on the frequency band assignment, and BCH represents a channel through which the master station periodically sends a signal to the slave stations to take frame synchronization between each slave station and the master station. BCH, FCH, and ACH represent channels through which the master station sends information to the slave stations.

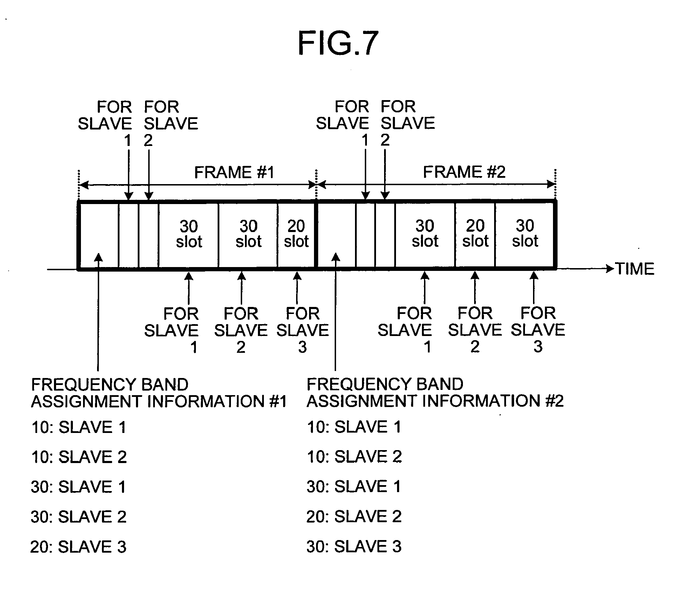

Fig. 7 is a diagram illustrating an example of a situation where a master station assigns a fixed frequency band to a plurality of slave stations. Voice communication is an example of communication that requires assignment of a fixed frequency band. In this situation, it is assumed that a fixed frequency band of 10 slots is assigned to each of the slave station 1 and the slave station 2. In the voice communication, the master station assigns this fixed frequency band to the slave stations from the start to the end of a telephone call, and at a time point when the telephone call is disconnected, the master station releases the fixed frequency band.

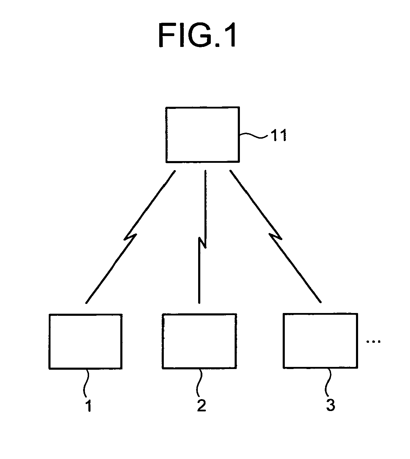

Patent Document 1: Japanese Patent Application Laid-open No. 2000-15236, Pages 2 to 3, Fig. 2.
Non-Patent Document 1: Morikura and Kubota: "802.11 High Speed Wireless LAN Textbook" Impress R&D, Page 28, Figs. 1 to 22, published on Jan. 1, 2005.

### DISCLOSURE OF INVENTION

### PROBLEM TO BE SOLVED BY THE INVENTION

However, the conventional media access control had problems as described below. For example, because the slave station does not know an upper limit (such as the number of slots) that could be requested for the frequency band assignment at the time when the slave station sends the frequency band request to the master station, the slave station may request for an excessive frequency band. For example, even if the number of assignable slots is only 100 in the master station, the slave station may request 120 slots; in which situation, the master station cannot realize the assignment requested from the slave station.

As a countermeasure for such a problem, one approach could be to set beforehand in the slave stations the maximum number of slots that can be requested; however, when the fixed frequency band is assigned for only a necessary time as in the conventional technique described above, because the upper limit value of the number of slots that the master station can assign change according to the assignment amount of the fixed frequency band, the maximum number of slots that the master station can request also changes obviously. That is, because the maximum number of slots that can be requested changes according to the assignment amount of the fixed frequency band, the maximum number of slots that can be requested cannot be set in the slave stations.

In addition, as another countermeasure for the problem described above, for example, as mentioned in Patent Document 1, there is a method in which the master station assigns the frequency band after subtracting the fixed frequency band value from the frequency band request value received from a slave station. However, if the slave station is assigned to fewer slots than the requested slots, because the slave station must create the transmission data after acknowledging the number of slots given from the master station, the slave station sometimes cannot meet the send timing of the next frame time. For example, when the slave station prepares and sends the transmission data after acknowledging the number of assignment slots, if the slave station performs FEC (Forward Error Correction) processing for encryption processing to prevent eavesdropping or correcting errors, the slave station sometimes cannot send the data at the assigned send timing.

The present invention has been achieved in view of the above discussion, and it is an object of the present invention to provide a media access control method with which the master station can assign a frequency band desired by the slave station.

### MEANS FOR SOLVING PROBLEM

To solve the above problems and to achieve the above object, a media access control method according to the present invention using time division multiple access in a communication system that includes a master station and a plurality of slave stations, includes a requestable frequency-band transmission step in which the master station transmits to the slave stations a maximum frequency band (a maximum requestable frequency band) that the slave stations can request; a frequency-band request step in which each of the slave stations requests to the master station a desired frequency band that does not exceed the maximum requestable frequency band received from the master station and starts creating transmission data corresponding to the desired frequency band; a frequency-band assignment step in which the master station assigns the desired frequency band to each of the slave stations; and a data transmission step in which each of the slave stations transmits to the master station the transmission data that has been created at the frequency-band assignment step using the desired frequency band.

### EFFECT OF THE INVENTION

According to the present invention, following advantageous effects can be achieved. A master station can assign a frequency band desired by each slave station without reducing the desired frequency band received from each of the slave stations. Moreover, because a frequency band that is desired by a slave station is assigned to the slave station without fail, the slave station can start the processing related to data transmission, for example, encryption and FEC processing, from a time point when the slave station transmits the frequency band request to the master station.

### BRIEF DESCRIPTION OF DRAWINGS

[Fig. 1] Fig. 1 is a diagram illustrating an example of the configuration of a communication system for realizing a media access control method according to the present invention.
[Fig. 2] Fig. 2 is a diagram for explaining the media access control method according to the present invention.
[Fig. 3] Fig. 3 is a diagram illustrating an example of a frame structure.
[Fig. 4] Fig. 4 is a diagram illustrating a conventional technique.
[Fig. 5] Fig. 5 is a diagram illustrating a conventional technique.
[Fig. 6] Fig. 6 is a diagram illustrating a conventional technique.
[Fig. 7] Fig. 7 is a diagram illustrating a conventional technique.

### EXPLANATIONS OF LETTERS OR NUMERALS

1, 2, 3 slave station
11 master station

### BEST MODE(S) FOR CARRYING OUT THE INVENTION

Exemplary embodiments of a media access control method according to the present invention will be explained below in detail with reference to the accompanying drawings. It is understood that the present invention is not limited to this embodiment described below.

Fig. 1 is a diagram illustrating an example of the configuration of a communication system, which includes a plurality of slave stations 1, 2, 3, ..., and a master station 11, for realizing the media access control method according to the present invention.

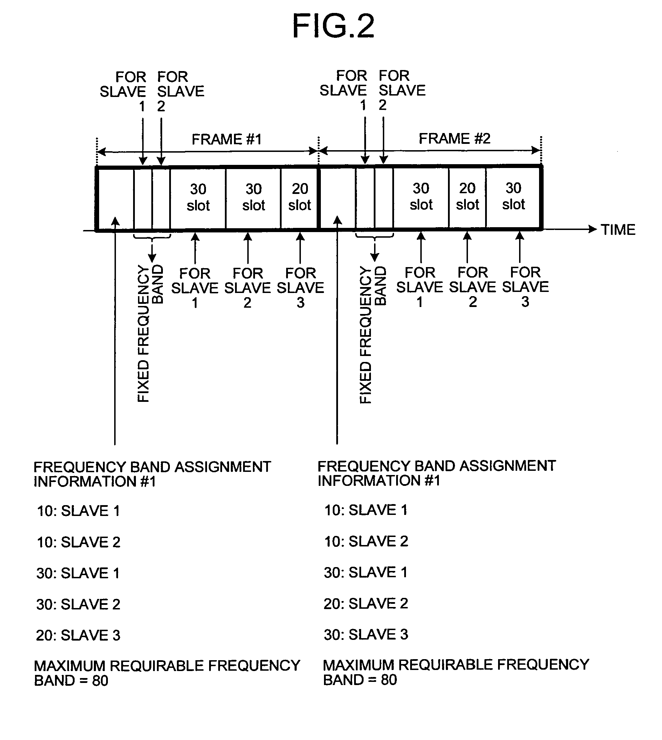

Moreover, Fig. 2 is a diagram for explaining the media access control method according to the present invention. In Fig. 2, frames #1 and #2 are frame times that the master station 11 employs as a basic time unit for scheduling. Moreover, frequency band assignment information #1 or #2 is a slot at which assignment information of each slave station (1, 2, 3 ...) assigned by the master station 11 is set including the information related to the maximum frequency band (hereafter, "maximum reqestable frequency band) that the slave station can request. It is assumed that the number of schedulable slots is 100 in the master station 11, the master station 11 assigns 20 slots as the fixed frequency band to the slave stations 1 and 2, and the maximum requestable frequency bands is 80. In reality, the fixed frequency band changes with time; therefore, the maximum requestable frequency band of the slave station also changes.

Subsequently, operation of each apparatus in the communication system described above, that is, the media access control method according to the present invention will be explained below in detail with reference to the accompanying drawings.

First, for example, at the time when starting a voice communication, the master station 11 assigns a fixed frequency band to the slave stations 1 and 2 when performing voice communication. At this time, the master station 11 subtracts the fixed frequency band (20 slots) from the assignable total frequency band (100 slots), sets the difference as "the maximum requestable frequency band", and sets for example, the frequency band assignment information #1 to "the maximum requestable frequency band" and sends the frequency band assignment information #1 to the slave stations.

Next, all the slave stations that belong to the master station 11 recognize "the maximum requestable frequency band", and when requesting a frequency band to the master station 11, request a frequency band so that the frequency band does not exceeds "the maximum requestable frequency band". Moreover, at this time point, the slave stations start creating transmission data (data creation) corresponding to the requested frequency band. For examples, the slave stations perform encryption and FEC processing.

Next, the master station 11 assigns the frequency band to each slave station without reducing the frequency band that have been requested from the each slave station. Because the timing to assign the frequency band to a particular slave station must be considered for the frequency band requests from other slave stations, the timing may not be necessarily the next frame. That is, the master station 11 assigns the desired frequency bands to all the slave stations that requested the frequency bands at any frame time without reducing the requested frequency bands. The master station 11 sends the frequency band information in which the scheduling result is included to the slave stations in the frame header.

When each slave station acknowledges that the frequency band requested by it has been assigned, the slave stations send the transmission data that has been composed beforehand using the processing described above to the master station 11.

As described above, in the present embodiment, a configuration is adapted in which the master station 11 informs the requestable maximum frequency band to each slave station. In addition, a configuration is adapted in which each slave station does not to request a frequency band exceeding the frequency band informed from the master station 11. With this configuration, the master station 11 can assign the frequency band desired by each slave station without reducing the requested frequency band received from each slave station. In addition, because the requested frequency band is assigned to each slave station without fail, the slave station can start the processing related to the data transmission, for example, encryption and FEC processing, from a time point when the slave station sends the frequency band request. With this configuration, because processing such as encryption can be realized by software, it is possible to reduce the circuit size of hardware.

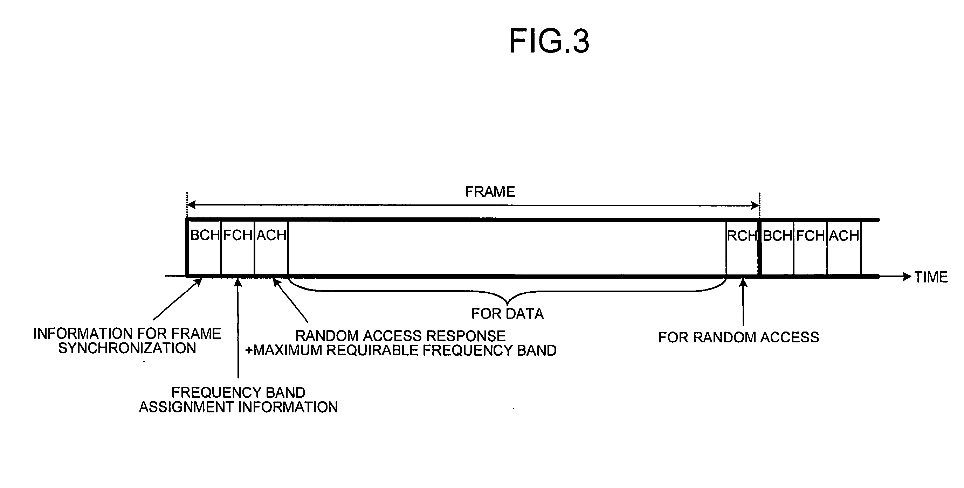

In the media access control of the present embodiment, the maximum requestable frequency band has been set to the frequency band assignment information channel and then the maximum requestable frequency band is sent to the slave stations. However, some other scheme can be employed. For example, the maximum requestable frequency band can be set to a channel for a random access response (ACH) as shown in Fig. 3 and then the maximum requestable frequency band can be sent to the slave stations. Alternatively, the maximum requestable frequency band can be set to an information channel for a frame synchronization (BCH) shown in Fig. 3 and then the maximum requestable frequency band can be sent to the slave stations.

### INDUSTRIAL APPLICABILITY

As described above, the media access control method according to the present invention can be advantageously used in a communication system employing the TDMA, and it is particularly suited to performing the media access control between a master station and a plurality of slave stations in the communication system employing the TDMA.

## Claims

1. A media access control method using time division multiple access in a communication system that includes a master station and a plurality of slave stations, the media access control method comprising:
a requestable frequency-band transmission step in which the master station transmits to the slave stations a maximum frequency band (a maximum requestable frequency band) that the slave stations can request;
a frequency-band request step in which each of the slave stations requests to the master station a desired frequency band that does not exceed the maximum requestable frequency band received from the master station and starts creating transmission data corresponding to the desired frequency band;
a frequency-band assignment step in which the master station assigns the desired frequency band to each of the slave stations; and
a data transmission step in which each of the slave stations transmits to the master station the transmission data that has been created at the frequency-band assignment step using the desired frequency band.

2. The media access control method according to claim 1, wherein the master station, when assigning a fixed frequency band to one or more slave stations from among the slave stations, calculates a difference between an assignable total frequency band and the fixed frequency band, and sets the difference as the maximum requestable frequency band.

3. The media access control method according to claim 1 or 2, wherein the master station assigns the desired frequency band by employing a frame as a basic time unit, and sets frequency band assignment information for each of the slave stations in a frequency-band assignment slot at a header of the frame.

4. The media access control method according to claim 1 or 2, wherein the master station transmits the maximum requestable frequency band using a broadcasting time slot to all the slave stations.

5. The media access control method according to claim 3, wherein the master station further sets the maximum requestable frequency band in the frequency-band assignment slot and transmits the frame.

6. The media access control method according to claim 1 or 2, wherein, when the communication system is HiSWANa (High Speed Wireless Access Network type a),
the master station assigns the desired frequency band by employing a frame as a basic time unit, sets frequency band assignment information in FCH in a frame and sets the maximum requestable frequency band in ACH in a frame, and transmits the frame.

7. The media access control method according to claim 1 or 2, wherein, when the communication system is HiSWANa (High Speed Wireless Access Network type a),
the master station assigns the desired frequency band by employing a frame as a basic time unit, sets frequency band assignment information in FCH in a frame and sets the maximum requestable frequency band in BCH in a frame, and transmits the frame.
